# EUROPEAN PATENT SPECIFICATION

(11) **EP 0 438 424 B1**
(45) Date of publication and mention of the grant of the patent: **21.07.1993**
(21) Application number: 89910679.3
(22) Date of filing: 22.09.1989
(51) Int. Cl.: F24H 9/12, F16K 11/10

(54) **FIXTURE APPARATUS WITH COMBINED SHUT-OFF VALVE AND CHECK VALVE FOR A HOT WATER HEATER OF THE PRESSURE TYPE**
VORRICHTUNG MIT KOMBINIERTEM ABSPERR- UND RÜCKSCHLAGVENTIL FÜR EINEN HEISSWASSERERHITZER DES DRUCKTYPES
DISPOSITIF A VANNE D'ARRET ET CLAPET ANTIRETOUR COMBINES POUR CHAUFFE-EAU DU TYPE A PRESSION

(30) Priority: 11.10.1988 NO 884526
(43) Date of publication of application: 31.07.1991
(73) Proprietor: BRAATHEN, Thor Frolich, N-3358 N. Eggedal (NO)
(72) Inventor: BRAATHEN, Thor Frolich, N-3358 N. Eggedal (NO)
(74) Representative: Delmar, John-Ake
(86) International application number: NO8900098
(87) International publication number: WO9004141

(56) References cited:
- FI-B- 57 840
- NO-B- 150 454
- SE-A-86 040 805

## Description

The present invention relates to a fixture apparatus having a combined shut-off valve and check valve comprising a valve body slidably disposed on a regulating stem for engagement with a valve seat in the fixture housing, and an optional mixing valve to be coupled into a cold water inlet pipe and hot water outlet pipe to a hot water heater of the pressure type, wherein the fixture housing has two passages with inlet and outlet openings for, respectively, cold water and hot water, and a transverse passage therebetween with the outlet opening for cold water to the hot water heater therein, said transverse passage also constituting a section of the cold water passage.

A fixture of the type mentioned above is known from the first part of the Applicant's own Norwegian patent application No. 874506 (corresponding to the EP-A-0314661, published 03.05.89) which with additions was continued in the Applicant's Norwegian patent application No. 884526 (corresponding to the EP-A-0438424, published 31.07.91) claiming priority from No. 874506.

The above-stated fixture is a further development of the Applicant's prior fixture such as disclosed in SE A 456 034, in which the fixture is provided with a mixing valve as well as a combined shut-off and check valve, each having a regulating means. By this feature the cold water inlet can be closed and opened by means of one of the regulating means and the temperature of the mixed water leaving the apparatures can be controlled by means of the other regulating means, which acts on a thermostat with a valve body. By means of said other regulating means the thermostat valve body also can be ajusted towards or into a closed position and thereby restrict or close the through-flow of cold mixing water past the thermostat and to the hot water outlet of the fixture. For example, this might be necessary in case of malfunction of the thermostat. The through-flow of cold mixing water to the hot water outlet then can be manually regulated or possibly shut-off in order to regulate the temperature of the water from the hot water outlet. In the structure described in No. 874506 mentioned above the two regulating means are combined into one regulating means in which, however, no manual regulation or shut-off of the flow of cold mixing water to the hot water outlet can be provided.

The purpose of the present invention is to provide in a fixture of the type mentioned in the introductory paragraph above, a simpler fixture housing for obtaining the performance of a further function in addition to the previously known functions of the fixture of this type.

This as achieved according to the present invention by means of the characteristic features that are disclosed in the following independent claim 1 and the subsequent dependent claims.

The fixture according to the invention will be further described in the following, with reference to the exemplary embodiments shown in the drawings, and wherein
- Figure 1: shows the Applicant's prior fixture seen in section from the side according to the line I-I in Figure 2,
- Figure 2: shows said prior fixture seen from above in section according to the line II-II in Figure 1, and
- Figure 3: shows the same as Figure 2, but with a valve body on the interior end of the stem for manual temperature regulation and for optionally shutting off the cold mixing water, according to the present invention.

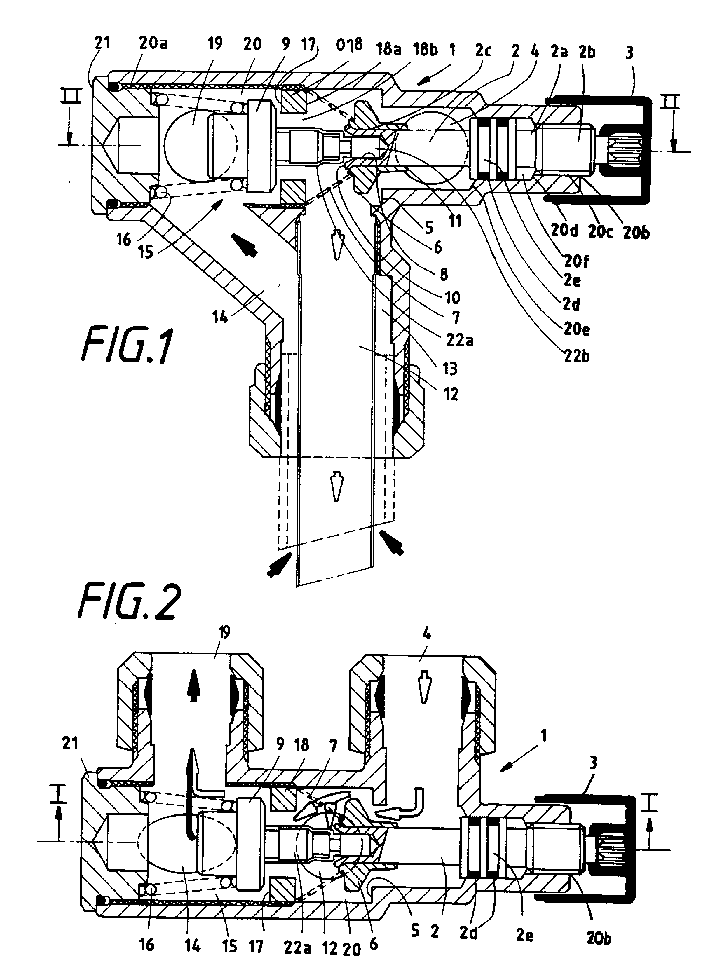

In more detailed terms, Figure 1 shows a fixture housing 1 with a combined shut-off valve and check valve 5, 6 together with a mixing valve 9, 17 of the thermostat type, which is also the subject of Figure 2.

The fixture as shown in Figures 1 and 2 has two passages, one cold water passage with inlet opening 4 and outlet opening 12 and one hot water passage with outlet opening 19 and inlet opening 13. A transverse passage 20 is provided between said cold water- and hot water passages and comprises said outlet opening 12 for cold water to the hot water heater, said transverse passage 20 also constituting a part of the cold water passage. The transverse passage 20 is made up of a bore passing through the fixture housing 1 and connecting with the cold water inlet opening 4 and the hot water outlet opening 19, and to the cold water outlet opening 12 to a hot water heater as well as hot water inlet opening 13,14 from the hot water heater.

As shown in the drawing, transverse passage 20 has three gradations 5, 20e and 20d, so that the transverse passage 20 has a stepwise diminishing cross section from its one opening 20a at the hot water outlet 19, to its other end with opening 20b at the inlet opening 4 of the cold water passage. Through the opening 20a of the transverse passage 20 there is inserted a combined shut-off valve and check valve comprising a valve body 6 slidably disposed on a regulating stem 2 for engagement with the gradation 5 which forms a valve seat in the fixture housing 1. The regulating stem 2 is provided with threads 2b at its free end which engage with threads 20c in the other opening 20b of the transverse passage. To seal off the stem 2 toward the opening 20b there are provided annular grooves 2e for sealing rings 2d that engage with a narrowed section forming a sealing chamber 20f between gradation 20e at the cold water inlet opening 4 and gradation 20d defining the threaded section 20c at the end 20b of the transverse passage 20.

The stem 2 is provided at its interior end with a carrier 10 in the form of a collar or outward deflection, to press the valve body 6 against the valve seat 5 as the stem 2 is screwed out, in order to shut off the cold water inlet. The valve body 6 is spring loaded by means of a helical spring 7 against the valve seat 5. The helical spring 7 rests against a disc 18 with a threaded circumference for engagement with a threaded section of the transverse passage 20 extending from the first opening 20a and into the cold water inlet opening 12 of the transverse passage 20. The disc 18 has a central opening 18b with a seat 17 for engagement with the valve body 9 of a mixing valve, whose valve stem 22a projects freely through the opening 18b in the washer 18 and with its free end 22b engages with an axial aperture 8 in the interior end 2c of the regulating stem 2. The valve body 9 is made up of a temperature sensor that by means of a helical spring 16 resting against the closure member 21 of the transverse passage 20, is spring tensioned in the direction of the seat 17 of the disc 18, said temperature sensor actuating the stem 22a of the valve body 9 by expansion or contraction, to enable the movement of the valve body 9 away from or in towards said seat 17.

As shown in figure 1, the illustrated fixture housing 1 is of the type having only one connection to the hot water heater, the cold water inlet 12 and the hot water outlet 13 in the fixture housing 1 being coaxial. Of course, the fixture housing may also be equipped with a separate cold water inlet 12 and hot water outlet 13, not shown here, however.

In the fixture, as shown in figures 1 and 2, the stem 2 is preferably provided with left-handed threads 2b engaging with left-handed threads 20c in the transverse passage 20. Provided that the valve body 6 is resting against the valve seat 5 and closes off the inflow of cold water through the cold water inlet opening 4, the shut-off valve may be opened in conventional manner by rotation of the wheel 3 toward the left as the stem 2 is screwed inwards and the valve body 6 is removed from the seat 5, enabling cold water to flow through the inlet opening 4 and past the valve body 6 and down into the cold water inlet opening 12 of the water heater, not shown. One thereby achieves the same rotational movement as with the opening of a conventional faucet, namely rotation toward the left. By rotating the wheel 3 toward the right, one achieves a corresponding closure of the shut-off valve 5,6. With the shut-off valve 5,6 in open position, the valve body 6 will bear resiliently against the valve seat 5 by means of the helical spring 7. As hot water is tapped, the flowing cold water will hereby shift the valve body 6 away from the valve seat 5 to open the flow passage. When the water is not being tapped, the valve body 6 is shifted back toward the valve seat 5 by the helical spring 7. By this means, the system is sealed when water is not being tapped and the valve functions as a check valve.

After the stem 2 has been screwed in far enough to establish a free passage for cold water, the cold water flows via the transverse passage 20 and the cold water inlet 12 through a pipe to the bottom of the hot water heater not shown. The hot water in the top of the hot water heater then runs out through the hot water outlet opening 13, which in the illustrated case is formed of an outer pipe 13 surrounding the inner pipe connected to the opening 12, and up through a side channel 14 to a mixing chamber 15 in the transverse passage 20, where the valve body 9 of the mixing valve, which also constitutes a temperature sensor, is clamped between the helical spring 16 and the axial aperture 8 in the interior end 2c of the regulating stem 2.

When the stem 2 is screwed down by means of the wheel 3, the mixing valve body 9 is simultaneously pressed away from the seat 17 of the ring 18 to open the flow of cold water past the temperature sensor 9 and into the mixing chamber 15 in the hot water passage. When hot water is drawn, the flow of cold mixing water through the mixing valve 9,17 can thus be adjusted by means of the wheel 3, and the temperature sensor 9 will thereafter maintain the desired temperature for the mixing water by increasing or decreasing, respectively, the passage opening between the valve body 9 and the seat 7.

In the foregoing fixture described, it is, according to the invention, possible to achieve by a simple means an additional combined function, over the above-mentioned functions, namely a regulating- and shut-off function for the flow of cold mixing water through said transverse passage 20 between the cold water inlet 4 and the hot water outlet 19. One way thereby regulate manually the temperature of the outflowing water as it is being tapped. This may be important in cases where a mixing valve 19,17 with a temperature sensor has not been mounted on the fixture, or in the case of failure of the temperature sensor.

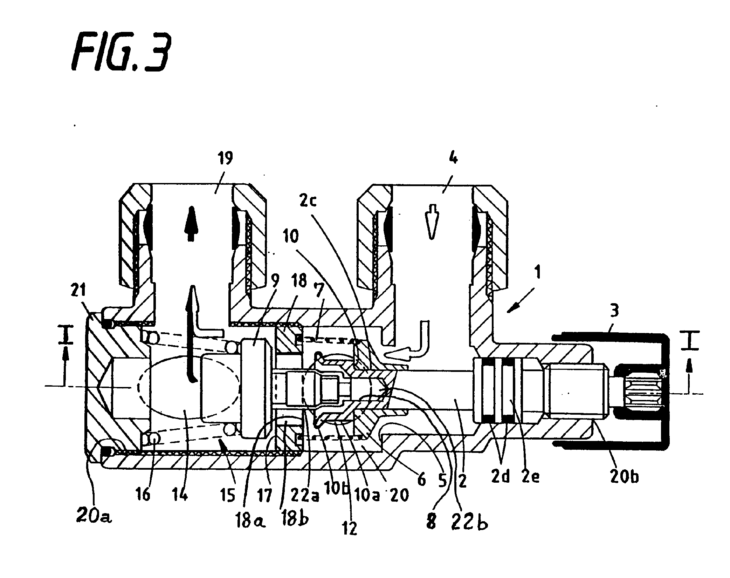

In the embodiment form according to Figure 3, the interior end 2c of the regulating stem 2 at the carrier 10 is provided with a valve body 10a which projects axially out from the end 2c of the stem 2 to engage with a valve seat 18a, which in the example described and as shown in Figure 3, is formed by one side of the disc 18.

The valve body 10a is designed here as a skirt whose free edge 10b is adapted for engagement with the valve seat 18a.

In the example shown, the skirt forms an extension of the bore 8 and surrounds the valve stem 22a. Further, the valve body 10a is formed with a shoulder that constitutes the carrier 10 with its end turned away from the free edge 10b.

Said free edge 10b of the skirt is spaced at a distance from the valve seat 18 when the stem 2 is screwed in for opening of the shut-off valve 6,5 and for adjustment of the mixing valve 9,17.

When the stem 2 is screwed in further by means of the wheel 3, the valve body 10a will be brought to rest against the valve seat 18a and close off the flow of cold mixing water through the transverse passage 20. By this means it is possible to tap hot water having the same temperature as that in the vessel.

In the event that the temperature sensor of the mixing valve 9,17 should fail, the temperature of the outflowing water may be regulated by means of the stem 2 with wheel 3, which on rotation brings the valve body 10a toward or away from the valve seat 18a. The valve body 10a may in that case be adjusted so that cold mixing water flows through the transverse passage 20 in an amount sufficient to avoid outflow of excessively hot water from the hot water outlet 19, thereby to prevent scalding injuries.

After the mixing valve 9,17 has been repaired or replaced, the stem 2 may be screwed outwardly to bring the valve body 10a into a neutral position, with the mixing valve 9,17 again taking over the automatic temperature regulation.

An important result of the invention is also the fact that the fixture may be used without the mixing valve 9,17, since the temperature of the outflowing hot water may be regulated by means of the regulating stem 2 in the manner mentioned above.

Thus, the fixture may be delivered with or without the automatic mixing valve 9,17 according to need or desire.

This means that it is possible to deliver a more reasonably priced fixture with manual temperature regulation, which can later be upgraded for automatic temperature regulation merely by mounting the temperature sensitive valve body in the transverse passage 20.

## Claims

1. A fixture apparatus having a combined shut-off valve and check valve comprising a valve body (6) slidably disposed on a regulating stem (2) for engagement with a valve seat (5) in the fixture housing (1), and an optional mixing valve (9,17; 22,17) to be coupled into a cold water inlet pipe and hot water outlet pipe to a hot water heater of the pressure type, wherein the fixture housing (1) has two passages with inlet and outlet openings (4,19,12,13) for, respectively, cold water and hot water, and a transverse passage (20) therebetween, with the outlet opening (12) for cold water to the hot water heater therein, said transverse passage (20) also constituting a section of the cold water passage, which transverse passage (20) is made up of a bore passing through the fixture housing (1), wherein the combined shut-off valve and check valve (5,6,2) and the optional mixing valve (9,17; 22,17) are disposed, and wherein the valve seat (5) for the combined valves is formed by a narrowed section provided in the transverse passage (20) between the cold water inlet (4) and the outlet opening (12) for cold water to the hot water heater, the stem (2) with the valve body (6) being inserted into the first opening (20a) of the transverse passage (20) at the hot water outlet (19), with the outer end (2a) of the stem (2), provided with threads (2b), in engagement with threads (20c) in the other opening (20b) of the transverse passage (20), and with the valve body (6) in spring loaded contact with the valve seat (5), the interior end (2c) of said stem (2) being provided with a carrier (10) for the valve body (6), and where the first opening of the transverse passage (20) is closed off by a closure member (21), for example, a threaded closure plug, and that the outer end (2a) of the stem (2), is provided with a regulating means (3), for example, a regulating wheel,
**characterized in** that a valve body (10a) is disposed on the interior end (2c) of the stem (2) and outside the carrier (10), to engage with a valve seat (18a) on a known per se narrowed area (18b) in the transverse passage (20) between the cold water outlet opening (12) and the hot water passage (19,13), for manual regulation and optional closing off of the flow of cold water through the transverse passage (20), thereby regulating the temperature of the hot water flowing out from the outlet opening (19).

2. An apparatus according to claim 1,
**characterized in** that the valve body (10a) is designed as a skirt whose free edge (10b) is adapted for engagement with the valve seat (18a).

3. An apparatus according to claim 1 or 2, wherein the narrowed area (18b) is formed by a disc (18) with a threaded circumference and central opening, screwed into the threaded section of the transverse passage (20) from the first opening (20a) thereof, one side of which disc forms a seat (18a) for a helical spring (7) which bears against the valve body (6) with its other end, and whose other side forms a seat (17) in the spring loaded (16) valve body (9) of a thermostatically controlled mixing valve (9,17), which valve body (9) is made up of a temperature sensor with its valve stem (22a) projecting freely through the opening (18b) in the disc (18) and with its free end (22b) in engagement with an axial bore (8) in the interior end (2c) of the regulating stem (2),
**characterized in** that the skirt of the valve body (10a) forms an extension of the bore (8) and surrounds the valve stem (22a).

4. An apparatus acording to claim 2 or 3,
**characterized in** that the end of the valve body (10a) turned away from its free edge (10b) is formed with a shoulder that constitutes the carrier (10).

## Patentansprüche

1. Beschlagvorrichtung mit einem kombinierten Absperrventil und Rückschlagventil, die einen Ventilkörper (6) aufweist, der verschiebbar an einem Reglerkolben (2) zum Eingriff mit einem Ventilsitz (5) in dem Beschlaggehäuse (1) angeordnet ist, und einem optionalen Mischventil (9, 17; 22, 17), das an ein Kaltwassereinlaßrohr und ein Heißwasserauslaßrohr an einem Druckwassererhitzer anzuschließen ist, wobei das Beschlaggehäuse (1) zwei Durchlässe mit Einlaß- und Auslaßöffnungen (4, 19, 12, 13) für kaltes bzw. heißes Wasser und dazwischen einen Querdurchlaß (20) mit der Auslaßöffnung (12) für kaltes Wasser zu dem heißen Wasser darin aufweist, wobei der Querdurchlaß (20) auch einen Abschnitt des Kaltwasserdurchlasses bildet, wobei der Querdurchlaß (20) aus einer Öffnung gebildet ist, die durch das Beschlaggehäuse (1) hindurchreicht, in dem das kombinierte Absperrventil und Rückschlagventil (5, 6, 2) und das optionale Mischventil (9, 17; 22, 17) angeordnet sind, und in dem der Ventilsitz (5) für die kombinierten Ventile durch einen sich verjüngenden Abschnitt gebildet ist, der in dem Querdurchlaß (20) zwischen dem Kaltwassereinlaß (4) und der Auslaßöffnung (12) für kaltes Wasser zu dem Heißwassererhitzer angeordnet ist, wobei der Kolben (2) mit dem Ventilkörper (6) in die erste Öffnung (20a) der Durchlaßöffnung (20) an dem Heißwasserauslaß (19) eingesetzt ist, wobei das äußere Ende (2a) des Kolbens (2) mit Gewindegängen (2b) versehen ist, die mit Gewindegängen (20c) in der anderen Öffnung (20b) des Querdurchlasses (20) in Eingriff stehen, und wobei der Ventilkörper (6) in federbelastetem Kontakt mit dem Ventilsitz (5) steht, das innere Ende (2c) des Kolbens (2) mit einem Träger (10) für den Ventilkörper (6) versehen ist und wobei die erste Öffnung des Querdurchlasses (20) durch ein Verschlußglied (21), z.B. einen mit einem Gewinde versehenen Verschlußstopfen, verschlossen ist, und wobei das äußere Ende (2a) des Kolbens (2) mit einer Stelleinrichtung (3), z.B. einem Stellrad, versehen ist,
dadurch **gekennzeichnet**,
daß der Ventilkörper (10a) an dem inneren Ende (2c) des Kolbens und außerhalb des Trägers (10) angeordnet ist, um ihn mit dem Ventilsitz (18a) an einer für sich bekannten sich verjüngenden Fläche (18b) in dem Querdurchlaß (20) zwischen der Kaltwasserauslaßöffnung (12) und dem Heißwasserdurchlaß (19, 13) in Eingriff zu kommen, um den Kaltwasserstrom durch den Querdurchlaß (20) von Hand einzustellen und gegebenenfalls zu verschließen, um die Temperatur des aus der Auslaßöffnung (19) ausströmenden heißen Wassers einzustellen.

2. Vorrichtung nach Anspruch 1,
dadurch **gekennzeichnet**,
daß der Ventilkörper (10a) als Schürze gestaltet ist, deren freie Kante (10b) für den Eingriff mit dem Ventilsitz (18) eingerichtet ist.

3. Vorrichtung nach Anspruch 1 oder 2,
bei der die sich verjüngende Fläche (18b) durch eine Scheibe (18) mit einem ein Gewinde aufweisenden Umfang und einer Mittelöffnung gebildet ist, die in den mit einem Gewinde versehenen Abschnitt des Querdurchlasses (20) von dessen erster Öffnung (20a) her eingeschraubt ist, wobei eine Seite der Scheibe einen Sitz (18a) für eine Schraubenfeder (7) bildet, die an den Ventilkörper (6) mit ihrem anderen Ende anliegt, und deren andere Seite einen Sitz (17) in dem federbelasteten (16) Ventilkörper (9) eines thermostatisch gesteuerten Mischventils (9, 17) bildet, wobei der Ventilkörper (9) aus einem Temperatursensor gebildet ist, dessen Ventilkolben (22a) frei durch die Öffnung (18b) in der Scheibe (18) hineinragt und dessen freies Ende (22b) im Eingriff mit einer axialen Öffnung (8) in dem inneren Ende (2c) des Reglerkolbens (2) steht,
dadurch **gekennzeichnet**,
daß die Schürze des Ventilkörpers (10a) eine Verlängerung der Öffnung (8) bildet und den Ventilkolben (22a) umgibt.

4. Vorrichtung nach Anspruch 2 oder 3,
dadurch **gekennzeichnet**,
daß das Ende des Ventilkörpers (10a), das von seiner freien Kante (10b) weggedreht ist, mit einer Schulter ausgebildet ist, die den Träger (10) bildet.

## Revendications

1. Un dispositif comportant une vanne d'arrêt et un clapet anti-retour combinés, comprenant un corps de vanne (6) disposé de manière coulissante sur une tige de régulation (2) pour coopérer avec un siège de vanne (5) dans l'enveloppe (1) du dispositif et éventuellement une vanne de mélange (9,17 ; 22,17) destinée à être couplée dans une conduite d'entrée d'eau froide et une conduite de sortie d'eau chaude vers un dispositif de chauffage d'eau chaude du type à pression, dans lequel l'enveloppe (1) présente deux passages comportant des ouvertures d'entrée et de sortie (9,4,12,13) respectivement pour l'eau froide et pour l'eau chaude, et un passage transversal (20) entre celles-ci, l'ouverture de sortie (12) pour l'eau froide vers le dispositif de chauffage de l'eau chaude étant située dans celui-ci, ledit passage transversal (20) constituant également une partie du passage pour l'eau froide, ce passage transversal (20) étant constitué par un alésage qui traverse l'enveloppe (1), dans lequel la vanne d'arrêt et le clapet anti-retour combinés (5,6,2) et l'éventuelle vanne de mélange (9,7 ; 22,17) sont disposés, et dans lequel le siège de vanne (5) pour la vanne et le clapet combinés est formé par une partie rétrécie prévue dans le passage transversal (20) entre l'entrée (4) d'eau froide et l'ouverture de sortie (12) pour l'eau froide vers le dispositif de chauffage d'eau chaude, la tige (2) avec le corps de vanne (6) étant introduite dans la première ouverture (20a) du passage transversal (20) à la sortie (19) d'eau chaude, l'extrémité extérieure (2a) de la tige (2), munie d'un filetage (2b), étant en coopération avec un filetage (20c) de l'autre ouverture (20b) du passage transversal (20), et le corps de vanne (6) étant en contact chargé par ressort avec le siège de vanne (5), l'extrémité intérieure (2c) de ladite tige (2) étant équipée d'un support (10) pour le corps de vanne (6), et la première ouverture du passage transversal (20) étant fermée par un élément d'obturation (21), par exemple un bouchon de fermeture vissé, et l'autre extrémité (2a) de la tige (2) comportant des moyens de régulation (3), par exemple une roue de régulation,
**caractérisé** en ce qu'un corps de vanne (10a) est disposé sur l'extrémité intérieure (2c) de la tige (2) et à l'extérieur du support (10), pour coopérer avec un siège de vanne (18a) d'une zone rétrécie (18b), connue en elle-même, du passage transversal (20) entre l'ouverture de sortie (12) d'eau froide et le passage (19,13) d'eau chaude, pour une régulation manuelle et un arrêt optionnel de l'écoulement d'eau froide à travers le passage transversal (20), de manière à réguler la température de l'eau chaude sortant de l'ouverture de sortie (19).

2. Un dispositif selon la revendication 1,
**caractérisé** en ce que le corps de vanne (10a) est conçu comme une chemise dont le bord libre (10b) est agencé pour coopérer avec le siège de vanne (18a).

3. Un dispositif selon la revendication 1 ou 2, dans lequel la zone rétrécie (18b) est formée par un disque (18) présentant une périphérie filetée et une ouverture centrale, vissé dans la partie taraudée du passage transversal (20) à partir de la première ouverture (20a) de celui-ci, un côté de ce disque formant un siège (18a) pour un ressort hélicoïdal (7) qui porte contre le corps de vanne (6) par son autre extrémité, et dont l'autre côté forme un siège (17) dans le corps de vanne (9) chargé par ressort (en 16) d'une vanne de mélange (9,17) commandée de manière thermostatique, ce corps de vanne (9) comportant un détecteur de température et la tige de vanne (22a) faisant saillie librement à travers l'ouverture (18b) du disque (18), et sont extrémité libre (22b) coopérant avec un alésage axial (8) de l'extrémité intérieure (2c) de la tige de régulation (2),
**caractérisé** en ce que la chemise du corps de vanne (10a) forme un prolongement de l'alésage (8) et entoure la tige de vanne (22a).

4. Un dispositif selon la revendication 2 ou 3,
**caractérisé** en ce que l'extrémité du corps de vanne (10a) éloignée de son bord libre (10b) présente un épaulement qui constitue le support (10).
